# EUROPEAN PATENT APPLICATION

(11) **EP 1 455 100 A1**
(43) Date of publication of application: **08.09.2004**
(21) Application number: 03425143.9
(22) Date of filing: 05.03.2003
(51) Int. Cl.: F16B 21/18

(54) **Device for mounting a motor in a support body and motor unit incorporating such a device**

(71) Applicant: Scanferla, Giorgio, 36061 Bassano del Grappa (VI) (IT)
(72) Inventor: Scanferla, Giorgio, 36061 Bassano del Grappa (VI) (IT)
(74) Representative: Bottero, Claudio

(57) **Abstract**

A device (17) for mounting a motor (10) in a support body (2,2a,2b) belonging to a valve assembly (1), to a throttled group (38) of an injection motor (39) and to a vehicle headlamp set (41), as well as a motor unit (18) incorporating such a device (17), are described. The device (17) comprises an elastically deformable annular body (19) including:
a) a radially outer portion (20) comprising first coupling means (21) intended to cooperate with respective first coupling counter means (22) formed in a motor compartment (3) defined in said support body (2,2a,2b) and
b) a radially inner portion (23) including second coupling means (24) intended to cooperate with respective second coupling counter means (25) formed in an end portion (16) of said motor (10,39) intended to be received in said motor compartment (3).

The motor (10,39) comprises abutment means (15) suitable for cooperating in abutting relationship with abutment counter means (33) formed in the support body (2,2a,2b), the second coupling means (24) of the mounting device (17) comprises a radially inner edge (30) of the annular body (19), whereas the second coupling counter means (25) comprises a recess (29) externally formed on said end portion (16) of the motor (10,39).

## Description

### Background of the invention

The present invention refers to a device for mounting a motor in a support body, such as for example a valve body of a valve assembly, a throttled body of an injection motor and a support body of a vehicle headlamp set.

The present invention also refers to a motor unit incorporating such mounting device, as well as to a valve assembly, to a throttled group of an injection motor and to a vehicle headlamp set provided with such motor unit.

The present invention also refers to a method for mounting a motor in a support body.

### Prior art

Devices for mounting a motor in a support body are known.

In the present description and in the subsequent claims, the term "support body" is used to indicate any body intended to support a motor, such as for example a valve body of a valve assembly, a throttled body of an injection motor, and a support body of a vehicle headlamp set.

With reference to known valve assemblies, these essentially comprise:
- a valve body in which at least one flowpath and a motor compartment are defined;
- a shutter slidably mounted in the valve body for cutting off the flowpath;
- a motor acting on a stem for driving the shutter and provided with a connector for the connection to power supply means, said motor comprising abutment means suitable for cooperating in abutting relationship with abutment counter means formed in the valve body; and
- a device for mounting the motor in the valve body.

In the present description and in the subsequent claims, the term "motor compartment" is used to indicate a recess intended to receive at least a portion of a motor, which motor is intended to actuate - in the case of a valve assembly - the actuator of the valve assembly.

It is equally known that in the field of valve assemblies for water-heating apparatuses, such as for example boilers or instant water heaters, a particular requirement is that the motor should be mounted in the valve body in a stable manner, so as to obtain a coupling capable of withstanding the thermal dilatations and/or the vibrations caused by the fluid flowing in the valve body.

Although different types of mounting devices and respective valve assembly constructions suitable for cooperating therewith have been on the market for a long time, none of such mounting devices with the respective valve assembly constructions have been able to fully satisfy such requirement without implying a worsening of the production costs and/or of the mounting times.

In a first type of mounting devices and respective valve assembly constructions, the mounting device essentially consists of a plate, on which the motor is housed, fixed at an end portion of the motor compartment of the valve body by means of a plurality of fastening screws.

The main drawback found in this type of mounting devices and respective valve assembly constructions consists of the fact that it is necessary to form, in the fastening plate and in the end portion of the motor compartment of the valve body, respective and corresponding pluralities of holes angularly staggered from one another. Although a sufficiently stable coupling between the motor and the valve body is ensured, the positioning of the motor in the valve body is time consuming since it is necessary to align the holes of the fastening plate with the holes of the end of the motor compartment for the insertion therein of the fastening screws.

In a second type of mounting devices and respective valve assembly constructions, the mounting device comprises a plate fixed at the end portion of the motor compartment of the valve body by means of a threaded locking nut which threadably engages with a thread externally formed on an end portion of the motor compartment of the valve body against which end portion an end portion of the motor intended to be received in the motor compartment abuts.

Although this second type of mounting devices is faster to install with respect to the above-mentioned first type of mounting devices, the second type of mounting devices and respective valve assembly constructions has, on the one hand, the drawback of being subject to loosening of the nut due to thermal dilatations and/or vibrations and, on the other hand, the drawback of incorporating a component, i.e. the locking nut, which is excessively expensive.

As to the throttled groups of the prior art, which are intended to adjust the idling of injection motors, they essentially comprise:
- a throttled body in which at least one flowpath and a motor compartment are defined;
- a shutter slidably mounted in the throttled body for cutting off the flowpath;
- a motor acting on a stem for driving the shutter and provided with a connector for the connection to power supply means, said motor comprising abutment means suitable for cooperating in abutting relationship with abutment counter means formed in the valve body; and
- a device for mounting the motor in the throttled body.

On the other hand, as to the known vehicle headlamp sets, and in particular headlamp sets of the type capable of adjusting the illumination axis of the headlamp set, they essentially comprise:
- a bulb and a reflector having a predetermined illumination axis;
- a support body in which at least one motor compartment is defined;
- adjustment means of the illumination axis of the headlamp set for adjusting the orientation of said reflector;
- a motor acting on said adjustment means and provided with a connector for the connection to power supply means, said motor comprising abutment means suitable for cooperating in abutting relationship with second abutment counter means formed in said support body; and
- a device for mounting the motor on the support body of the headlamp set.

In a known type of mounting devices and respective throttled group constructions of an injection motor and vehicle headlamp set constructions, the mounting device essentially consists of a plate, on which the motor is housed, and which is fixed thereto by means of a plurality of fastening screws. In the case of headlamp sets, such a plate can be arranged inside or outside a protective casing of the bulb, normally below and in the back of the same, i.e. in a position opposite to that of the bulb.

Although the throttled groups of injection motors and the headlamp sets of the prior art are substantially capable of ensuring a sufficiently stable coupling between the support body and the motor, they do however have the drawback of being structurally complex and excessively expensive.

### Summary of the invention

The technical problem underlying the present invention is therefore that of providing a device for mounting a motor in a support body - such as for example a valve body of a valve assembly, a throttled body of an injection motor or a support body of a vehicle headlamp set - which is structurally simple and inexpensive and which allows to achieve a stable coupling, i.e. which is able to effectively withstand the effects due to thermal dilatations and/or vibrations.

According to the invention, this problem is solved by a device for mounting a motor in a support body, comprising an elastically deformable annular body including:
a) a radially outer portion comprising first coupling means intended to cooperate with respective first coupling counter means formed in a motor compartment defined in said support body, and
b) a radially inner portion including second coupling means intended to cooperate with respective second coupling counter means formed in an end portion of said motor intended to be received in said motor compartment,
wherein said motor comprises abutment means suitable for cooperating in abutting relationship with abutment counter means formed in the support body,
wherein said second coupling means of the mounting device comprises a radially inner edge of the annular body, and
wherein said second coupling counter means comprises a recess externally formed on said end portion of the motor.

In the present description and in the subsequent claims, the term "radially inner portion of the annular portion" is used to indicate the portion of the annular body comprising the second coupling means thereof.

Thanks to the above-mentioned structural features, the mounting device of the invention allows not only to achieve the desired stability of coupling of the motor on a valve assembly, on a throttled group or on a vehicle headlamp set, but also to simplify the mounting operations of the motor in the support body, as well as corresponding demounting operations of the motor from the support body, operations which essentially take place in two subsequent steps.

In a first mounting step, the mounting device is mounted on the end portion of the motor intended to be received in the motor compartment to form a motor/mounting device assembly, thanks to the cooperation between the second coupling means of the mounting device and the second coupling counter means defined in the above-mentioned end portion of the motor.

In a second mounting step, the assembly thus formed is then coupled to the motor compartment of the support body thanks to the cooperation between the first coupling means of the mounting device and the first coupling counter means defined in the support body.

Due to this cooperation of parts, the motor/mounting device assembly undergoes a simultaneous axial translation movement along the longitudinal axis of the annular body of the device until a stop position is reached, said stop position being determined by the cooperation in abutting relationship of the above-mentioned abutment means of the motor with the abutment counter means formed in the support body.

In accordance with a preferred embodiment of the invention, the above-mentioned first coupling means comprises a threaded portion of the radially outer portion of the annular body, and the above-mentioned first coupling counter means comprises a threaded portion internally formed in the motor compartment.

In such a way, the coupling between the mounting device and the support body is advantageously optimised, reversible and fast and simple to carry out.

In the same way, the decoupling between the mounting device and the support body is also advantageously optimised, so as to advantageously carry out a simple and fast extraction operation of the motor for the subsequent repair thereof in the case of failure or for replacement thereof when it breaks.

In accordance with such preferred embodiment of the invention, in fact, the motor/mounting device assembly rotates about the longitudinal axis of the annular body of the device in a predetermined direction and undergoes a simultaneous axial translation movement along such axis until a stop position is reached, said stop position being determined by the cooperation in abutting relationship of the above-mentioned abutment means of the motor with the abutment counter means formed in the support body.

At such stop position, at which the motor can no longer translate any more, the radially outer portion of the device still tends to rotate, whereas the translation of the radially inner edge of the annular body of the mounting device is axially prevented by the recess externally formed on the end portion of the motor. Accordingly, due to such a blocking of the radially inner edge of the mounting device, the elastically deformable annular body tends to undergo a compression in the axial direction, thus increasing the tightening load up to the point in which a tightening torque is established between the motor and the valve body which is capable of overcoming the coupling force between the second coupling means and the second coupling counter means.

In other words, thanks to such features, and in particular thanks to the elasticity of the annular body of the mounting device, a coupling between the motor and the support body of the self-locking type is advantageously ensured, which coupling is conveniently stable also in the presence of possible phenomena of thermal dilatation and/or vibrations.

In accordance with a preferred embodiment of the invention, the above-mentioned second coupling means and counter means are adjustable coupling means and, respectively, counter means.

Preferably, the above-mentioned second coupling means and counter means are angularly adjustable coupling means and, respectively, counter means, so as to advantageously adjust at will the angular position of the motor with respect to the support body.

Advantageously, in such a way it is possible to position the connector of the power supply means of the motor at any desired angular position.

Once a stable coupling between the motor and the support body is achieved, as illustrated above, in fact, a further rotation in the above-mentioned predetermined direction of rotation ensures that the tightening torque remains substantially constant, this being possible thanks to the adjustability of the coupling between the second means and counter means, with a consequent advantageous complete orientability of the motor (and therefore of the connector associated therewith) with respect to the support body.

Preferably, the above-mentioned first coupling means and the above-mentioned first coupling counter means are reversible coupling means and, respectively, counter means, so as to advantageously allow the decoupling between the motor/mounting device assembly and the support body and to allow, in such a way, the maintenance and the possible replacement of one of these.

More specifically, thanks to such preferred feature of the mounting device of the invention, the motor/mounting device assembly can undergo a rotation in the opposite direction with respect to the predetermined direction of rotation used in the above-mentioned mounting steps. In the case in which such a rotation in the opposite direction is thus given, the compression in the axial direction of the elastically deformable annular body is nullified or at least reduced and the coupling ensured between the second coupling means and the second coupling counter means is sufficient to maintain the motor and the mounting device integral, with a consequent advantageous possibility of demounting the motor/mounting device assembly from the support body.

Preferably, the above-mentioned second coupling means and the above-mentioned second coupling counter means are reversible coupling means and, respectively, counter means, so as to advantageously allow the decoupling between the mounting device and the motor and to allow, in such a way, the maintenance and the possible replacement of one of these.

Preferably, the second coupling means comprises at least one elastically deformable fin axially formed in the radially inner portion of the annular body and extending along a direction substantially parallel to the longitudinal axis of the annular body.

Thus, by suitably shaping such elastically deformable fin, for example in such a manner that this cooperates in a snap-fit manner with the end portion of the motor at a predetermined number of positions, it is advantageously possible to couple the motor with the support body at such number of positions without the need of demounting the motor from the support body.

Preferably, the second coupling means comprises a plurality of elastically deformable fins angularly staggered from one another, said fins being axially formed in the radially inner portion of the annular body and extending along a direction substantially parallel to the longitudinal axis of the annular body.

In such a way, the adjustable coupling between the mounting device and the motor is advantageously easier.

In accordance with a preferred embodiment, the second coupling means comprises a plurality of teeth radially formed in the above-mentioned at least one fin and the second coupling counter means comprises a corresponding plurality of projections with a shape mating the teeth which are externally formed in the above-mentioned end portion of the motor.

In such a way, once the mounting device has been associated with the motor to form a motor unit comprising the motor/mounting device assembly and the motor unit thus obtained has been mounted in the support body, the motor can advantageously rotate with respect to the support body by a gradual jog in a number of positions equal to the number of projections formed on the end portion of the motor.

Preferably, the teeth formed on the fins of the mounting device comprise bevelled comers, so as to ease the adjustment of the position of the motor and, with this, of the connector, with respect to the support body.

In accordance with a preferred embodiment, the second coupling means further comprises a protection ring intended to be placed between the above-mentioned radially inner edge of the annular body and the above-mentioned recess of the end portion of the motor.

Such a preferred embodiment is advantageously suitable for protecting the end portion of the motor from the wear caused by the rotation of the mounting device on the end portion of the motor when the mounting of the motor unit in the support body is completed. Such a preferred embodiment, in particular, is convenient when the end portion of the motor is made of a material, such as for example plastic, which is substantially less resistant than the material of which the mounting device is preferably made, such as for example, as illustrated hereafter, spring steel.

Preferably, the annular body of the mounting device of the invention is integrally made of an elastically deformable material selected from the group comprising: spring steel, AISI 301-302 steel, phosphorus bronze.

In accordance with a second aspect of the invention, a motor unit is provided comprising a motor and an mounting device such as the device illustrated above.

Moreover, the present invention provides a motor unit as defined by the attached claim 12, a valve assembly as defined by the attached claim 13, a throttled group of an injection motor as defined by the attached claim 14, a vehicle headlamp set as defined by the attached claim 15, as well as a method for mounting a motor in a valve body of a valve assembly as defined by the attached claim 17.

### Brief description of the drawings

Additional features and advantages of the invention will be apparent from the description of three preferred embodiments of a device for mounting a motor in a support body of a valve assembly, of a throttled body of an injection motor and, respectively, of a vehicle headlamp set according to the invention, given hereafter for illustrative and not limiting purposes with reference to the accompanying drawings. In such drawings:
- figure 1 is a top view of a device for mounting a motor in a valve body of a valve assembly according to the present invention;
- figure 2 is a cross-sectional view of the mounting device of figure 1;
- figure 3 is a front view in partial cross-section of a motor unit according to the invention, incorporating the mounting device of figure 1, which unit is inserted in a motor compartment of a valve body;
- figure 4 is a front view in partial cross-section of a valve assembly according to the invention, provided with the motor unit of figure 3;
- figure 5 is a front view in partial cross-section of a motor unit according to the invention, incorporating the mounting device of figure 1, which unit is inserted in a motor compartment of a throttled body of an injection motor; and
- figure 6 is a front view in partial cross-section of a motor unit according to the invention, incorporating the mounting device of figure 1, which unit is inserted in a motor compartment of a support body of a vehicle headlamp set.

### Detailed description of the preferred embodiments

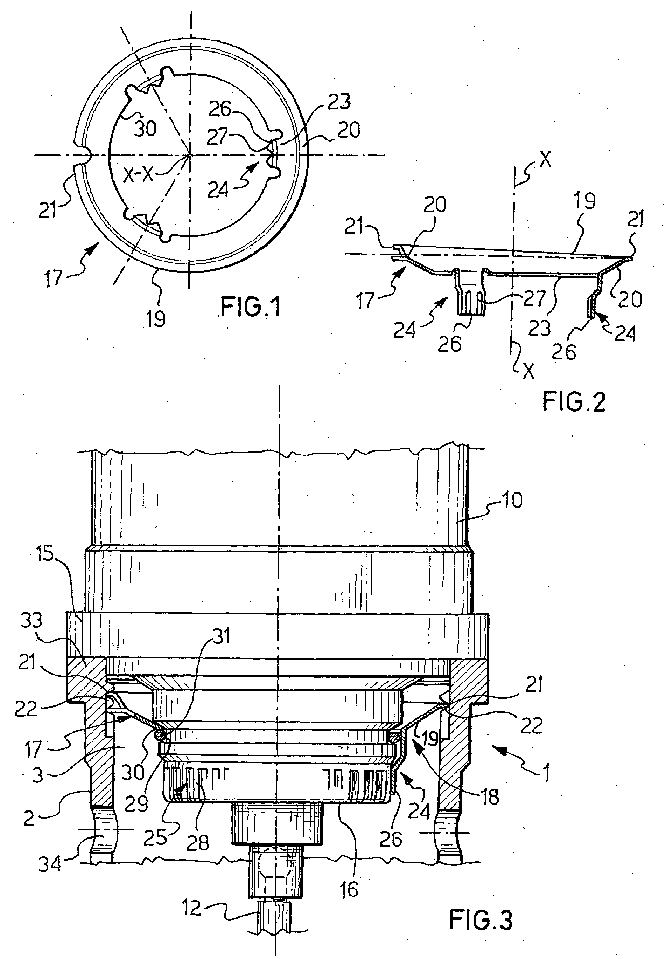

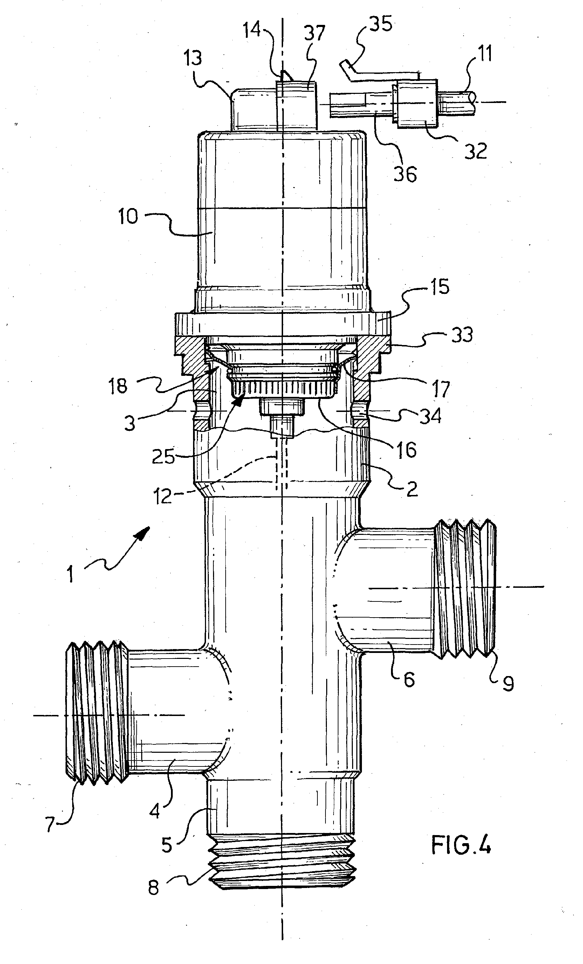

With reference to figures 3 and 4, a valve assembly in accordance with a first preferred embodiment of the invention is generally indicated with 1.

In particular, the illustrated valve assembly 1 is a three-way valve assembly intended to be mounted in household water-heating apparatuses, such as for example household gas-fired boilers.

In the illustrated embodiment, the valve assembly 1 comprises a valve body 2 in which at least one flowpath is defined. In the case illustrated, in the valve body 2 a fluid inlet conduit 4, a first fluid outlet conduit 5 and a second fluid outlet conduit 6 are formed. In particular, the inlet and outlet conduits 4, 5 and 6 are externally threaded by means of threads 7, 8 and, respectively, 9, for threadably coupling, in a way conventional *per se,* to the ends of threaded fittings (not shown) of respective water circuits, also not shown.

Moreover, in the valve body 2 a motor compartment 3 is defined for receiving at least one portion of a motor 10 intended to drive the valve assembly 1.

In the motor compartment 3 a plurality of radial holes, indicated with 34, is preferably circumferentially arranged in an equidistant manner, which holes are suitable for allowing the removal of fluid from the motor compartment 3 which may have leaked therein.

In the motor compartment 3, moreover, first coupling counter means 22 are formed for coupling the valve body 2 with the motor 10, the function of which shall become clearer from the subsequent description.

In addition to the valve body 2, the valve assembly 1 comprises a shutter, not shown and conventional *per se,* slidably mounted in the valve body 2 for cutting off the above-mentioned flowpath, and the above-mentioned motor 10 acting on a stem 12 for driving the shutter and supplied, in a way conventional *per se,* by power supply means by means of an electric cable 11.

The motor 10 is also provided with a connector 13 for the connection to the electric cable 11. In the preferred embodiment illustrated in figure 4, the electric cable 11 is connected to a plug 36 intended to be received in a corresponding socket 37 arranged on the connector 13. The plug 36 is provided with a ring 32 provided with an elastic tab 35 in which a hole (not illustrated) intended to receive a corresponding pin 14 arranged on the connector 13 is formed.

As illustrated in the above-mentioned figures, and in accordance with the invention, the motor 10 comprises abutment means 15 suitable for cooperating in abutting relationship with abutment counter means 33 formed in the valve body 2, preferably at the free end of the motor compartment 3, the function of which shall be better illustrated in the subsequent description.

Moreover, an end portion of the motor 10 is indicated with 16, which is intended to be received in the motor compartment 3 of the valve body 2 for mounting the motor 10 in the valve body 2, which is preferably made of plastic.

In the end portion 16 of the motor 10 second coupling counter means 25 are formed, such means being preferably adjustable and provided to couple the valve body 2 with the motor 10, the function of which shall become clearer from the subsequent description.

In accordance with the invention, the valve assembly 1 further comprises a device 17 for mounting the motor 10 in the valve body 2.

In the above-mentioned figures, moreover, a motor unit according to the invention is generally indicated with 18, which unit comprises the above-mentioned mounting device 17 associated with the end portion 16 of the motor 10. In the illustrated preferred embodiment, the mounting device 17 is removably associated with the end portion 16 of the motor 10, so as to allow - for example for maintenance purposes - a decoupling between the mounting device 17 and the motor 10.

The mounting device 17 is better illustrated in figures 1 and 2. In accordance with the invention, the mounting device 17 comprises an elastically deformable annular body 19, for example made of spring steel, including:
a) a radially outer portion 20 comprising first reversible coupling means 21 intended to cooperate with the respective first coupling counter means 22 formed in the motor compartment 3 of the valve body 2, and
b) a radially inner portion 23 including second coupling means 24, said means being preferably adjustable and intended to cooperate with the respective above-mentioned second adjustable coupling counter means 25 formed in the above-mentioned end portion 16 of the motor 10 for adjusting the angular orientation of the motor 10 with respect to the valve body 2.

Moreover, in accordance with the invention, the second coupling counter means 25 further comprises a recess 29 externally formed on the end portion 16 of the motor 10. Correspondingly, the second coupling means 24 comprises a radially inner edge 30 of the annular body 19, said edge being intended to be received in such recess 29.

In accordance with the illustrated preferred embodiment, the first coupling means 21 comprises a threaded portion of the radially outer portion 23 of the annular body 19 (figures 1-2), and the first coupling counter means 22 comprises a threaded portion internally formed in the motor compartment 3 (figures 3-4).

In such a way, it is advantageously possible to decouple the motor 3/mounting device 17 assembly and the valve body 2 and to allow, in such a way, the maintenance and the possible replacement of such an assembly and/or of the valve body 2.

In accordance with the preferred embodiment illustrated in such figures, the second coupling means 24 comprises at least one elastically deformable fin 26 axially formed in the radially inner portion 23 of the annular body 19 and extending along a direction substantially parallel to the longitudinal axis X-X of the annular body 19.

The second coupling means 24 preferably comprises a plurality of such fins 26 angularly staggered from one another, in the illustrated embodiment in number of three, staggered from one another of about 120°.

According to the preferred embodiment illustrated in figures 1 and 2, the second coupling means 24 comprises a plurality of radial teeth 27 formed in each of the above-mentioned fins 26 and provided with preferably bevelled comers intended to reversibly cooperate in a snap-fit manner with the above-mentioned second coupling counter means 25. In accordance with the preferred embodiment illustrated in figures 3 and 4, the second coupling counter means 25 comprises a corresponding plurality of projections 28 with a shape mating the teeth 27 externally formed on the end portion 16 of the motor 10.

In the illustrated preferred embodiment, the second coupling means 24 of the mounting device 17 further comprises a protection ring 31 intended to be placed between the radially inner edge 30 of the annular body 19 and the recess 29 of the end portion 16 of the motor 10 to preserve the end portion 16 from undesired risks of wear caused by the annular body 19 of the mounting device 17.

With reference to the valve assembly 1 illustrated above, a method for mounting the motor 10 in the valve body 2 of the valve assembly 1 will now be described.

In a first step of the method of the invention, after having preliminarily inserted the protection ring 31 within the recess 29 of the end portion 16, the mounting device 17 is mounted on the end portion 16 of the motor 10 in such a way that the radially inner edge 30 is received in the recess 29 and that the teeth 27 of the fins 26 are received by the projections 28 externally formed on the end portion 16 of the motor 10.

In such a way, the motor unit 18 is formed, which comprises a motor 10/mounting device 17 assembly.

In a subsequent step of the method of the invention, the motor unit 18 is inserted in the motor compartment 3 of the valve body 2 until a stop position is reached, said stop position being defined by the abutment of the abutment means 15 of the motor 10 against the abutment counter means 33 formed in the valve body 2.

In particular, in accordance with a preferred embodiment of the invention, the motor unit 18 is inserted in the motor compartment 3 by screwing the threaded portion of the first coupling means 21 formed at the radially outer portion 23 of the annular body 19 on the corresponding threaded portion internally formed in the motor compartment 3 of the valve body 2.

During such a step, therefore, the motor unit 18 rotates about the longitudinal axis X-X of the annular body 19 according to a predetermined direction of rotation, thus translating longitudinally in a direction parallel to such axis.

At the above-mentioned stop position, a stable coupling between the motor 10 and the valve body 2 is advantageously ensured.

A further rotation about the longitudinal axis X-X, in fact, tends to further advance the radially outer portion 20 of the annular body 19, whereas the radially inner edge 30 of the same body 19 is blocked by the recess 29, with the consequence that, due to a further rotation, the elastically deformable annular body 19 of the mounting device 17 is compressed in the axial direction. In such a way, the tightening load between the motor 10 and the valve body 2 is increased up to the point in which a tightening torque is established which is capable of overcoming the coupling force between the teeth 27 of the fins 26 and the projections 28.

Thanks to this, the coupling between the motor 10 and the valve body 2 is self-locking and advantageously stable, i.e. capable of withstanding possible phenomena of thermal dilatation and/or vibrations due to the fluid flowing in the valve body 2.

At this point, during a further rotation of the motor 10 about the longitudinal axis X-X, the tightening torque remains substantially constant, with a consequent advantageous orientability of the motor 10 and of the connector 13 with respect to the valve body 2, the latter being positionable in an easily accessible position for connection to the power supply means.

In accordance with the method of the invention, in fact, which comprises a possible further adjustment step of the angular orientation of the motor 10 with respect to the valve body 2, the motor 10 remains blocked in the axial direction at the above-mentioned stop position, but the cooperation between the fins 26 and the projections 28 of the motor 10 allows a rotation of the motor 10 about the above-mentioned longitudinal axis X-X in the above-mentioned predetermined direction of rotation.

The rotation and the adjustment of the position of the connector 13 is made possible by the fact that the elastically deformable fins 26 can jog along the circumferential development of the end portion 16, so as to insert the teeth 27 in the projections 28 at any desired angular position of the motor 10.

If the motor 10 is rotated in the opposite direction with respect to the direction of the rotation imparted to the motor during the above-mentioned mounting step and subsequent step of adjusting the angular orientation of the motor 10, the compression in the axial direction of the elastically deformable annular body 19 is reduced and the coupling ensured by the cooperation between the teeth 27 of the fins 26 and the projections 28 is sufficient to maintain the motor 10 and the mounting device 17 integral. In such a way, it is advantageously possible to demount the motor unit 18 from the valve body 2.

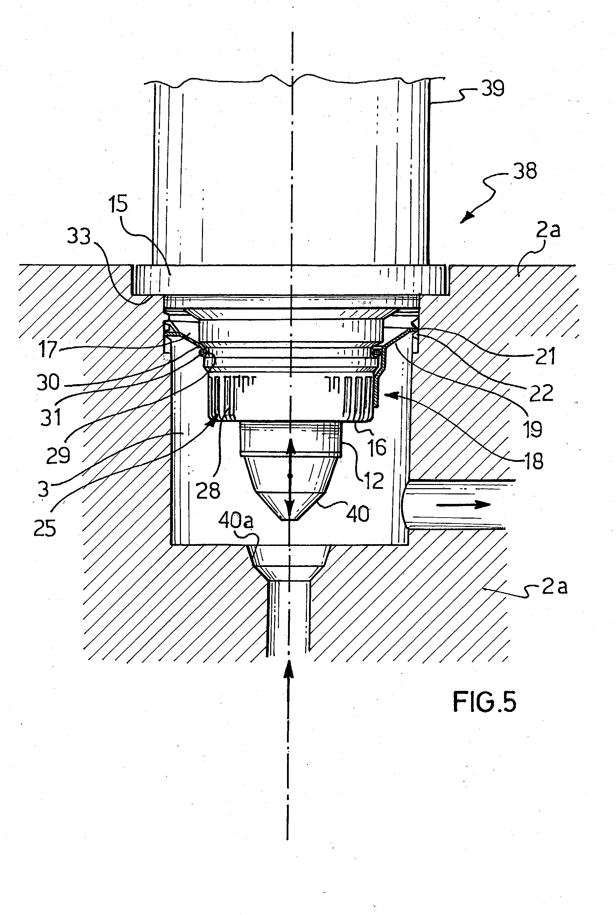

In figures 5-6 as many preferred embodiments of the device 17 for mounting a motor in a support body according to the invention are schematically illustrated.

In the following description and in such figures, the elements of the motor unit which are structurally or functionally equivalent to those previously illustrated with reference to figures 1-4 will be indicated with the same reference numbers and will not be further described.

With reference to figure 5, a throttled group 38 of an electronic fuel injection motor 39 is schematically illustrated therein, which group is intended to adjust the idling of the motor by means of a regulation of the air flow.

More specifically, in a throttled body 2a, in addition to the motor compartment 3, an air flowpath is defined, the flow rate of which can be modulated thanks to a shutter 40. For such a purpose, the shape of the shutter 40 may have the most suitable profile for providing an optimal regulation of the air flow rate according to the position with respect to a valve seat 40a.

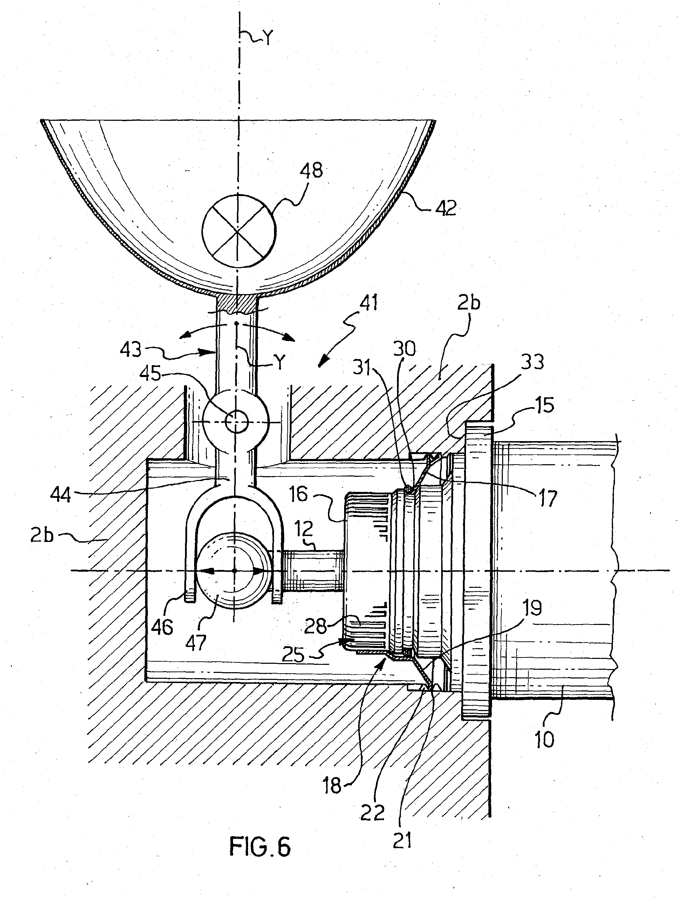

With reference to figure 6, on the other hand, a vehicle headlamp set 41 is schematically illustrated therein.

In the preferred embodiment illustrated in such a figure, the headlamp set 41 comprises a bulb, conventional *per se* and schematically indicated with 48, and a reflector 42 having a predetermined illumination axis Y-Y. The bulb 48 and the reflector 42 are enclosed in a protective casing, not shown and conventional *per se,* for example consisting of a rear support part and a transparent front part.

Moreover, the headlamp set 41 according to the invention comprises a support body 2b, in the preferred embodiment illustrated in figure 6 formed in the support part of the protective casing, in which at least one motor compartment 3, as well as adjustment means 43 of the illumination axis Y-Y of the headlamp set 41 for adjusting the orientation of the reflector 42 are formed.

In the preferred embodiment illustrated in figure 6, the adjustment means 43 comprises an arm 44 connected to the reflector 42 and hinged in a pin 45. The free end of the arm 44, indicated with 46 in such a figure, is preferably fork-shaped, so as to engage with a respective ball 47 slidably mounted in the motor compartment 3 by a driving stem 12 on which the motor 10 acts.

In the illustrated embodiment, the illumination axis Y-Y of the headlamp set 41 is substantially perpendicular to the longitudinal axis X-X of the annular body 19 of the mounting device 17.

In accordance with an alternative embodiment of the headlamp set of the invention, not shown, the support body may be arranged outwardly of the protective casing of the bulb and fixed thereto in a way conventional *per se.*

From what has been described and illustrated above, all the advantages achieved by the invention are immediately apparent, and especially those related to the possibility of mounting/demounting a motor in/from a support body in a simple and reliable manner and at a low cost, while ensuring at the same time a coupling which, in the case of valve assemblies, is able to effectively withstand thermal dilatations and/or vibrations caused by the fluid flowing in the valve body, or, in the case of throttled groups of injection motors and of vehicle headlamp sets, is able to effectively withstand thermal dilatations and/or vibrations to which the vehicle is subjected.

## Claims

**1.** A device (17) for mounting a motor (10, 39) in a support body (2, 2a, 2b), comprising an elastically deformable annular body (19) including:
a) a radially outer portion (20) comprising first coupling means (21) intended to cooperate with respective first coupling counter means (22) formed in a motor compartment (3) defined in said support body (2, 2a, 2b), and
b) a radially inner portion (23) including second coupling means (24) intended to cooperate with respective second coupling counter means (25) formed in an end portion (16) of said motor (10, 39) intended to be received in said motor compartment (3),
wherein said motor (10, 39) comprises abutment means (15) suitable for cooperating in abutting relationship with abutment counter means (33) formed in the support body (2, 2a, 2b),
wherein said second coupling means (24) of the mounting device (17) comprises a radially inner edge (30) of the annular body (19), and
wherein said second coupling counter means (25) comprises a recess (29) externally formed on said end portion (16) of the motor (10, 39).

**2.** The device (17) according to claim 1, wherein said support body (2, 2a, 2b) is selected from the group comprising a valve body (2), a throttled body (2a) of an injection motor (39) and a support body (2b) of a vehicle headlamp set (41).

**3.** The device (17) according to claim 1, wherein said first coupling means (21) and counter means (22) are reversible coupling means and, respectively, counter means.

**4.** The device (17) according to claim 1, wherein said first coupling means (21) comprises a threaded portion of said radially outer portion (20) of the annular body (19), and wherein said first coupling counter means (22) comprises a threaded portion internally formed in said motor compartment (3).

**5.** The device (17) according to claim 1, wherein said second coupling means (24) and counter means (25) are adjustable coupling means and, respectively, counter means.

**6.** The device (17) according to claim 5, wherein said second coupling means (24) comprises at least one elastically deformable fin (26) axially formed in said radially inner portion (23) of the annular body (19) and extending along a direction substantially parallel to the longitudinal axis (X-X) of said annular body (19).

**7.** The device (17) according to claim 5, wherein said second coupling means (24) comprises a plurality of elastically deformable fins (26) angularly staggered from one another, said fins (26) being axially formed in said radially inner portion (23) of the annular body (19) and extending along a direction substantially parallel to the longitudinal axis (X-X) of said annular body (19).

**8.** The device (17) according to claim 6 or 7, wherein said second coupling means (24) further comprises a plurality of radial teeth (27) formed in said at least one fin (26) and wherein said second coupling counter means (25) comprises a corresponding plurality of projections (28) suitable for cooperating in a snap-fit manner with said teeth (27) and externally formed on said end portion (16) of the motor (10).

**9.** The device (17) according to claim 8, wherein said teeth (27) comprise bevelled comers.

**10.** The device (17) according to claim 1, wherein said second coupling means (24) further comprises a protection ring (31) intended to be placed between said radially inner edge (30) of the annular body (19) and said recess (29) externally formed on said end portion (16) of the motor (10, 39).

**11.** The device (17) according to any one of the preceding claims, wherein said annular body (19) is integrally made of an elastically deformable material selected from the group comprising: spring steel, AISI 301-302 steel, phosphorus bronze.

**12.** A motor unit (18) comprising a motor (10, 39) and a mounting device (17) according to any one of the preceding claims, said mounting device (17) being associated with an end portion (16) of said motor (10, 39) intended to be received in a motor compartment (3) of a support body (2, 2a, 2b) for mounting the motor (10) in the support body (2, 2a, 2b).

**13.** A valve assembly (1) comprising:
- a valve body (2) in which at least one flowpath and a motor compartment (3) are defined;
- a shutter slidably mounted in said valve body (2) for cutting off said flowpath;
- a motor (10) acting on a stem (12) for driving said shutter and provided with a connector (13) for the connection to power supply means, said motor (10) comprising abutment means (15) suitable for cooperating in abutting relationship with second abutment counter means (33) formed in said valve body (2);
**characterised in that** said valve assembly (1) further comprises a device (17) for mounting the motor (10) in the valve body (2) according to any one of claims 1-11.

**14.** A throttled group of an injection motor comprising:
- a throttled body (2a) in which at least one flowpath and a motor compartment (3) are defined;
- a shutter (40) slidably mounted in said support body (2) for cutting off said flowpath;
- a motor (39) acting on a stem (12) for driving said shutter (40) and provided with a connector for the connection to power supply means, said motor (39) comprising abutment means (15) suitable for cooperating in abutting relationship with second abutment counter means (33) formed in said throttled body (2a);
**characterised in that** said throttled group further comprises a device (17) for mounting the motor (39) in the throttled body (2a) according to any one of claims 1-11.

**15.** A vehicle headlamp set (41) comprising:
- a bulb (48) and a reflector (42) having a predetermined illumination axis (Y-Y);
- a support body (2b) in which at least one motor compartment (3) is defined;
- adjustment means (43) of the illumination axis (Y-Y) of the headlamp set (41) for adjusting the orientation of said reflector;
- a motor (10) acting on said adjustment means (43) and provided with a connector for the connection to power supply means, said motor (10) comprising abutment means (15) suitable for cooperating in abutting relationship with second abutment counter means (33) formed in said support body (2b); and
- a device (17) for mounting the motor (10) on the support body (2b) according to any one of claims 1-11.

**17.** A method for mounting a motor (10, 39) in a support body (2, 2a, 2b), said motor (10, 39) being provided with abutment means (15) suitable for cooperating in abutting relationship with respective abutment counter means (33) formed in said support body (2, 2a, 2b), wherein the method comprises the steps of:
- mounting a mounting device (17) according to any one of claims 1-11 on an end portion (16) of the motor (10, 39) intended to be received in a motor compartment (3) defined in the support body (2, 2a, 2b);
- inserting the motor (10, 39)/mounting device (17) assembly in said motor compartment (3) until a stop position is reached, said stop position being defined by the abutment between said abutment means (15) and counter means (33); and
- possibly adjusting the angular orientation of the motor (10, 39) with respect to the support body (2, 2a, 2b) by rotating said motor (10) at said stop position.

**18.** The method according to claim 17, wherein said support body (2, 2a, 2b) is selected from the group comprising a valve body (2), a throttled body (2a) of an injection motor (39) and a support body (2b) of a vehicle headlamp set (41).
